# EUROPÄISCHE PATENTANMELDUNG

(11) **EP 1 014 403 A1**
(43) Veröffentlichungstag der Anmeldung: **28.06.2000**
(21) Anmeldenummer: 98811251.2
(22) Anmeldetag: 21.12.1998
(51) Int. Cl.: H01H 9/54, H02H 9/02, H01C 7/02

(54) **Strombegrenzender Schalter**

(71) Anmelder: Asea Brown Boveri AG, 5401 Baden (CH)
(72) Erfinder: Fröhlich, Klaus, Prof. Dr., CH-5400 Baden (CH); Steurer, Michael, A-1120 Wien (AT); Holaus, Walter, A-6274 Aschau i.Z (AT); Mendik. Michael, Dr., CH-8820 Wädenswil (CH); Kaltenegger, Kurt, Dr., CH-5426 Lengnau (CH)
(74) Vertreter: Kaiser, Helmut

(57) **Zusammenfassung**

Der strombegrenzende Schalter weist eine zur Aufnahme von Nennstrom bestimmte lichtbogenfeste Kontaktanordnung S₁ und einen parallel zur Nennstromkontaktanordnung S₁ geschalteten Kommutierungspfad K₁ mit einer stromunterbrechenden Schaltvorrichtung T auf. Parallel zur Nennstromkontaktanordnung S₁ und zum Kommutierungspfad K₁ ist ein Kommutierungspfad K₂ geschaltet. Dieser Kommutierungspfad enthält einen verzögert auf den von ihm geführten Kommutierungsstrom ansprechenden Strombegrenzer R_{B} und eine in Serie zum Strombegrenzer R_{B} geschaltete Schaltvorrichtung T_{P}.

Während der durch den Strombegrenzer R_{B} bewirkten Zeitverzögerung kann sich über den beiden Kommutierungspfaden keine Überspannung aufbauen und kann zugleich im Kommutierungspfad K₁ eine überspannungsfeste Trennstrecke S_{T} gebildet werden. Diese Trennstrecke schützt die Schaltvorrichtung T vor Überspannung, welche beim Begrenzen des vom Strombegrenzer im Kommutierungspfad K₂ geführten Kommutierungsstroms auftritt. Die verhältnismässig teure Schaltvorrichtung T kann daher auf geringe Spannungsbelastung dimensioniert werden. Selbst in Mittel- und Hochspannungsnetzen kann so auf eine Serienschaltung der kostenintensiven Schaltvorrichtungen T verzichtet werden.

## Beschreibung

### TECHNISCHES GEBIET

Bei der Erfindung wird ausgegangen von einem strombegrenzenden Schalter nach dem Oberbegriff von Patentanspruch 1.

### STAND DER TECHNIK

Die Erfindung nimmt auf einen Stand der Technik von strombegrenzenden Schaltern bezug wie er etwa in DE 43 17 965 A1 und EP 0 272 349 A1 beschrieben ist. Die vorbekannten Schalter sind zum Abschalten eines Netzzweiges ausgelegt und weisen einen sehr schnellen mechanischen Schalter mit galvanischen Kontakten, welche innerhalb einiger Mikrosekunden voneinander getrennt werden können, auf sowie parallel zum Schalter liegend einen Kommutierungspfad mit einem kurzschlusssstromunterbrechenden Halbleiterschalter, beispielsweise einen abschaltbaren Thyristor, wie vorzugsweise einen GTO. Beim Abschalten des Netzzweiges liegt die volle Netzspannung am Halbleiterschalter. Da der Halbleiterschalter allenfalls mit Spannungen bis zu wenigen kV belastbar ist, werden diese strombegrenzenden Schalter in Niederspannungsnetzen eingesetzt.

### KURZE DARSTELLUNG DER ERFINDUNG

Der Erfindung, wie sie in den Patentansprüchen angegeben ist, liegt die Aufgabe zugrunde, einen strombegrenzenden Schalter der eingangs genannten Art zu schaffen, welcher trotz einfachen Aufbaus ein sicheres und zuverlässiges Ab- und Zuschalten von Netzteilen auch von Hoch- und Mittelspannungsnetzen ermöglicht.

Der strombegrenzende Schalter nach der Erfindung weist neben einem ersten Kommutierungspfad mit einer stromunterbrechenden ersten Schaltvorrichtung zusätzlich einen zweiten Kommutierungspfad auf. Im zweiten Kommutierungspfad sind ein Strombegrenzer und eine dazu in Serie liegende zweite Schaltvorrichtung angeordnet. Der Strombegrenzer ist derart ausgebildet, dass von ihm geführter Strom, welcher beim Öffnen der ansteuerbaren Schaltvorrichtung vom ersten in den zweiten Kommutierungspfad kommutiert ist, zeitlich verzögert begrenzt wird. Während dieser Zeitverzögerung kann sich über den beiden Kommutierungspfaden keine Überspannung aufbauen und kann zugleich im ersten Kommutierungspfad eine überspannungsfeste Trennstrecke gebildet werden. Diese Trennstrecke schützt die erste Schaltvorrichtung vor Überspannung, welche beim Begrenzen des vom Strombegrenzer im zweiten Kommutierungspfad geführten Kommutierungsstroms auftritt. Die verhältnismässig teure erste Schaltvorrichtung kann daher auf geringe Spannungsbelastung dimensioniert werden. Selbst in Mittel- und Hochspannungsnetzen kann so auf eine Serienschaltung der kostenintensiven ersten Schaltvorrichtungen verzichtet werden.

### KURZE BESCHREIBUNG DER ZEICHNUNG

Bevorzugte Ausführungsbeispiele der Erfindung und die damit erzielbaren weiteren Vorteile werden nachfolgend anhand von Zeichnungen näher erläutert. Hierbei zeigt:
- Fig.1: eine einphasige Grundschaltung einer ein Mittelspannungsnetz nachbildenden Prüfvorrichtung mit einer ersten Ausführungsform des strombegrenzenden Schalters nach der Erfindung,
- Fig.2: ein Diagramm, in dem der Strom- und der Spannungsverlauf über dem strombegrenzenden Schalter beim Abschalten eines in der Prüfvorrichtung gemäss Fig.1 fliessenden Kurzschlussstroms in Funktion der Zeit dargestellt sind,
- Fig.3: eine einphasige Grundschaltung einer ein Mittelspannungsnetz nachbildenden Prüfvorrichtung mit einer zweiten Ausführungsform des strombegrenzenden Schalters nach der Erfindung, und
- Fig.4: in perspektivischer Ansicht einen als PTC-Widerstand ausgeführten Strombegrenzer der in den Figuren 1 und 3 dargestellten Ausführungsformen des strombegrenzenden Schalters nach der Erfindung.

### WEGE ZUR AUSFÜHRUNG DER ERFINDUNG

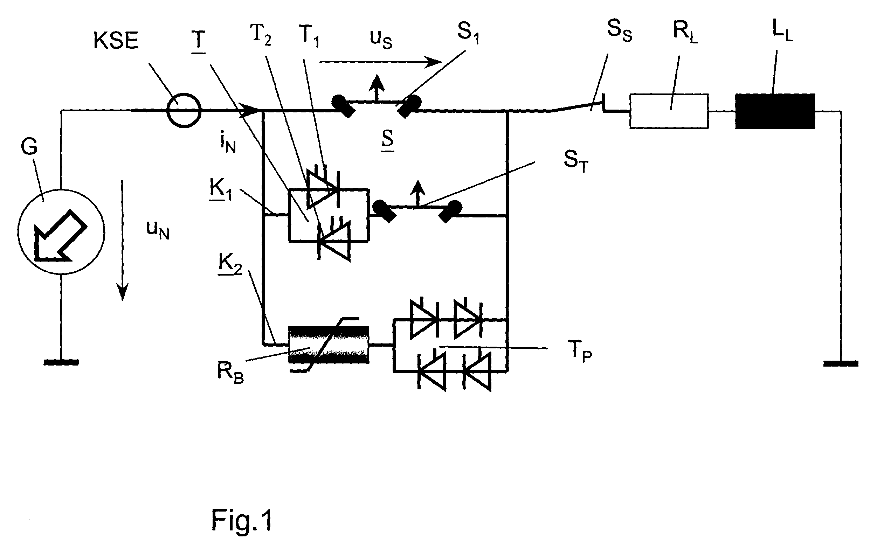

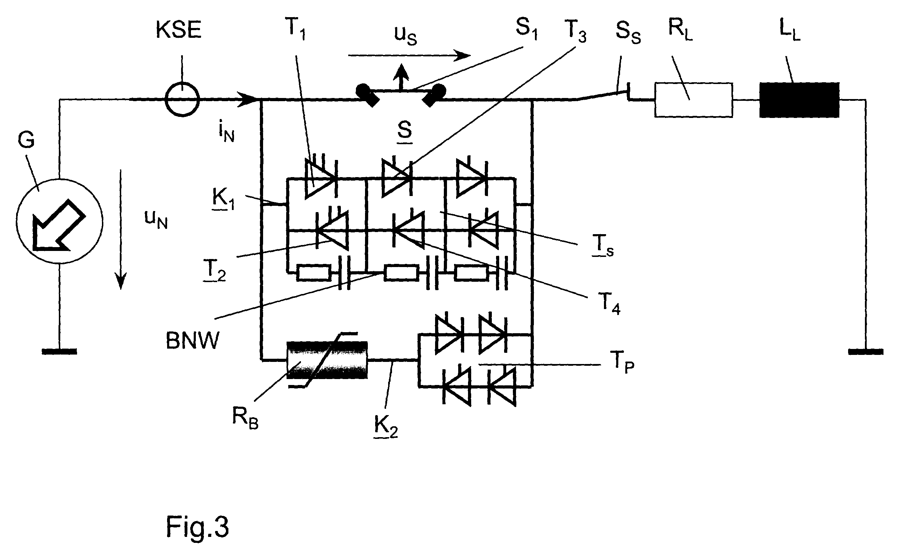

In allen Figuren beziehen sich gleiche Bezugszeichen auf gleichwirkende Teile. Die in den Figuren 1 und 3 dargestellten Schaltungen umfassen eine einphasige Grundschaltung einer ein Mittelspannungsnetz nachbildenden Prüfvorrichtung mit jeweils einem strombegrenzenden Schalter S. Die Prüfvorrichtung enthält einen eine Netzspannung u_{N} von typischerweise einigen 10 kV, beispielsweise 20 kV, nachbildenden Generator G, welcher über den strombegrenzenden Schalter eine durch einen ohmschen Widerstand R_{L} und eine Induktivität L_{L} nachgebildete Last speist. Eine zwischen Generator G und Schalter S angeordnete und auf den Schalter S wirkende Kurzschlusserkennungseinheit KSE weist ein Mess- und Auswerteteil zur sehr raschen Erkennung von Kurzschlussströmen i_{N} auf. Die Kurzschlussströme liegen typischerweise bei einigen 10 kA, beispielsweise 20 kA. Der Schalter S weist im Strompfad vom Generator zur Last liegend eine sehr rasch, d.h. typischerweise innerhalb 100 bis 500 µs, beispielsweise 250 µs, öffnende lichtbogenfeste Nennstromkontaktanordnung S₁ auf, sowie einen in Serie dazu geschalteten Trennschalter S_{S}. Die lichtbogenfeste Kontaktanordnung S₁ kann lediglich eine Nennstromkontaktstelle umfassen, kann aber auch zwei oder mehr in Serie geschaltete Nennstromkontaktstellen enthalten.

Parallel zur Nennstromkontaktanordnung S₁ sind zwei Kommutierungspfade K₁ und K₂ geschaltet. Der Kommutierungspfad K₁ enthält eine elektrisch ansteuerbare Schaltvorrichtung T. Die Schaltvorrichtung T ist mit Vorteil ein abschaltbarer Halbleiterschalter T₁, beispielsweise ein Thyristor, wie insbesondere ein GTO. Die Schaltvorrichtung T kann zu Zwecken einer hohen Stromtragfähigkeit anstelle eines Halbleiterschalters T₁ auch mehrere parallel geschaltete Halbleiterschalter enthalten. Um bei einem Wechselstrom sowohl bei negativer als auch bei positiver Polarität ein rasches Ansprechen der Schaltvorrichtung T zu erzielen, weist die Schaltvorrichtung einen oder mehrere weitere Halbleiterschalter T₂ auf, welche antiparallel zu dem einen oder den mehreren weiteren Halbleiterschaltern T₁ geschaltet sind.

Der Kommutierungspfad K₂ ist parallel zur Nennstromkontaktanordnung S₁ und zum Kommutierungspfad K₁ geschaltet und weist einen Strombegrenzer R_{B} und eine in Serie zum Strombegrenzer geschaltete Schaltvorrichtung T_{P} auf. Der Strombegrenzer R_{B} spricht auf einen Kommutierungsstrom verzögert an und ist mit Vorteil als PTC-Widerstand ausgebildet. Die Schaltvorrichtung T_{P} enthält mindestens einen, vorteilhafterweise jedoch zumindest zwei zueinander antiparallel geschaltete, Halbleiterschalter, welche nicht notwendigerweise abschaltbar ausgebildet sein müssen, jedoch einen von ihnen geführten Wechselstrom im Stromnulldurchgang löschen können, wie insbesondere Thyristoren oder Triacs. Durch Anordnung weiterer solcher Halbleiterschalter in Serie kann die dielektrische Belastbarkeit der Schaltvorrichtung T_{P} vergrössert werden.

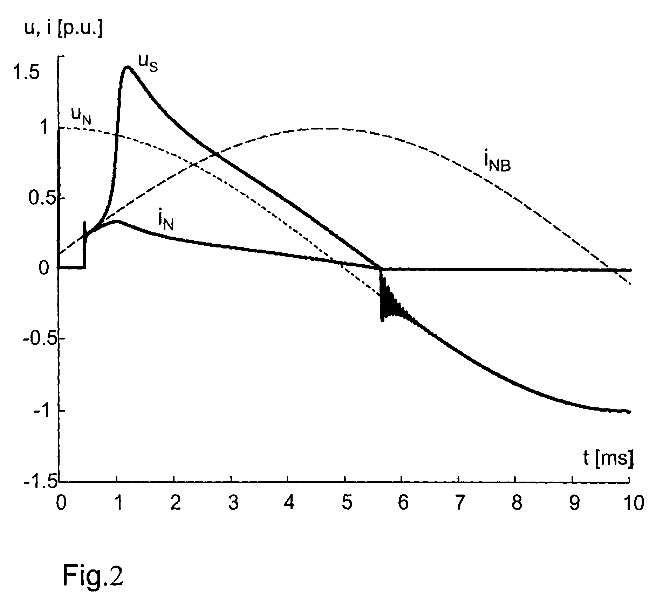

Die Wirkungsweise der strombegrenzenden Schalter nach den Figuren 1 und 3 wird nachfolgend anhand von Fig.2 näher erläutert.

Bei der Ausführungsform nach Fig.1 liegt im Kommutierungspfad K₁ in Serie zur Schaltvorrichtung T eine rasch öffnende Trennschaltstelle S_{T} (Öffnungszeit typischerweise einige 100 µs) mit mechanisch voneinander trennbaren Kontakten. Beim Auftreten des Kurzschlussstromes i_{N} (ein nicht begrenzter Kurzschlussstrom i_{NB} ist in Fig.2 gestrichelt dargestellt) löst die Erkennungseinheit KSE am strombegrenzenden Schalter S innerhalb von etwa 100 µs einen Abschaltvorgang aus. Dabei werden sofort die in den beiden Kommutierungspfaden K₁ und K₂ liegenden Schaltvorrichtungen T und T_{P} leitfähig gemacht. Zugleich wird die Nennstromkontaktanordnung S₁ geöffnet. Bedingt durch den hierbei gebildeten Lichtbogen kommutiert der noch ansteigende Kurzschlussstrom innerhalb von etwa 250 µs in den Kommutierungspfad K₁. Dieser bleibt solange leitfähig bis über der Nennstromkontaktanordnung S₁ eine Spannungsfestigkeit erreicht wird, welche etwas grösser ist als die Spannungsfestigkeit von T. Der abzuschaltende Kurzschlussstrom kommutiert dann in den Kommutierungspfad K₂. Dabei entsteht sowohl eine transiente Überspannung auf Grund der Streuinduktivitäten als auch ein ohmscher Spannungsabfall am Strombegrenzer R_{B}. Der Strombegrenzer R_{B} begrenzt mit einer Verzögerung von einigen 100 µs. Diese Zeitverzögerung reicht aus, um die Nennstromkontaktanordnung S₁ und die Trennkontaktanordnung S_{T} praktisch leistungslos zu öffnen. Nach dem Öffnen der Trennkontaktanordnung S_{T} fällt im Kommutierungspfad K₁ praktisch die gesamte am Schalter S anstehende Spannung U_{S} über dieser Trennkontaktanordnung ab. Da der Strombegrenzer R_{B} verzögert anspricht, beginnt die Begrenzung des nun im Kommutierungspfad K₂ fliessenden Kurzschlussstroms erst nach dem Öffnen von S₁ und S_{T}. Der begrenzte Kurzschlusstrom kann beim folgenden Stromnulldurchgang, beispielsweise nach 5 bis 6 ms, durch die Schaltvorrichtung T_{P} mit sehr geringer Überspannung abgeschaltet werden. Danach wird durch Öffnen des Trennschalters S_{S} eine galvanische Trennstrecke hergestellt.

Eine betriebsmässige Abschaltung erfolgt ähnlich, lediglich die Kurvenform des Stromes bleibt annähernd sinusförmig, weil die Strombegrenzung nicht wirksam wird.

Beim Einschalten von Betriebsmitteln und Verbrauchern kann durch phasenrichtiges (synchrones) Schalten mit Hilfe der Halbleiterschalter der Schaltvorrichtung Tp das Auftreten von Ausgleichsvorgängen und damit verbundenen Überspannungen vermieden werden. Wird dabei auf einen Kurzschluss geschaltet, so wirkt die Begrenzung, weil ja bereits der Strombegrenzer R_{B} im Kurzschlusskreis liegt.

Danach wird der Einschaltantrieb von S₁ und S_{T} im Spannungsnulldurchgang der Netzspannung ausgelöst. Ein nach dieser Auslösung auftretender Kurzschlussstrom kann daher nur sehr langsam ansteigen und bis zum vollständigen Schliessen von S₁ und S_{T} keine unzulässig hohen Werte erreichen. Danach ist das System wieder im geschlossenen Ausgangszustand und für eine eventuelle Kurzschlussunterbrechung betriebsbereit.

Die Ausführungsform nach Fig.3 weist grundsätzlich die gleiche Wirkungsweise auf jedoch enthält sie anstelle der Trennkontaktanordnung S_{T} eine von antiparallel geschalteten Halbleiterschaltern (T₃, T₄) gebildete Schaltvorrichtung T_{S,} welche in Serie zur Schaltvorrichtung T liegt. Die Halbleiterschalter der Schaltvorrichtung T_{S} sind entsprechend den Halbleiterschaltern der Schaltvorrichtung T_{P} ausgebildet. Zusätzlich ist ein von RC-Gliedern gebildetes Beschaltungsnetzwerk BNW vorgesehen, welches parallel zur Nennstromkontaktanordnung S₁ und zur Serienschaltung der Schaltvorrichtung 1 und der Trennkontaktanordnung T_{S} liegt. Dieses Beschaltungsnetzwerk dient zur Spannungssteuerung über den Halbleiterschaltern T₁ bis T₄. Dadurch können bewegte mechanische Teile eingespart werden.

Bei dieser Ausführungsform des strombegrenzenden Schalter gehen nach dem Abschalten von 1, die Halbleiterschalter von T_{S} in den sperrenden Zustand über und die Spannung an der Serienschaltung dieser Halbleiterschalter teilt sich entsprechend dem Beschaltungsnetzwerk BNW auf. Wieder muss der Strombegrenzer R_{B} verzögert wirksam werden, damit die Freiwerdezeiten der Halbleiterschalter der Schaltvorrichtung T_{S} eingehalten, und die Spannungsfestigkeit der Nennstromkontaktanordnung S₁ erreicht werden können.

Die Einschaltung kann hier über die Schaltvorrichtungen T und T_{S} erfolgen, was eine geringere Beeinflussung des Netzstromes durch den Strombegrenzer R_{B} bewirkt. Wird dabei ein Kurzschluss von KSE erkannt, so bleibt das Schliessen von S₁ aus und der Kommutierungsvorgang von T₁ auf R_{B} wird unmittelbar eingeleitet.

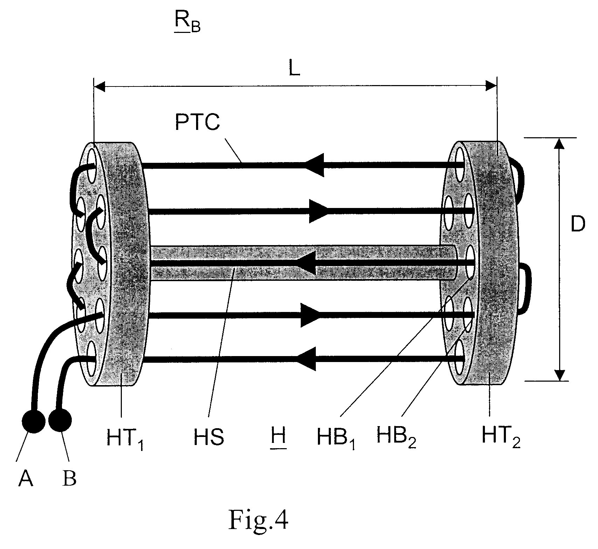

In Fig.4 ist ein Ausführungsbeispiel eines als Strombegrenzer R_{B} im Mittelspannungsbereich verwendeten PTC-Widerstands dargestellt. Dieser Widerstand weist einen axialsymmetrisch ausgebildeten Tragkörper H und einen nach Art eines Mäanders geführten Widerstandsdraht PTC aus einem PTC-Eigenschaften aufweisenden Material, z.B. Reinnickel oder Eisen-Kobalt-Legierungen, auf Der Tragkörper H ist aus einem thermisch und dielektrisch hochwertigen Werkstoff, beispielsweise einem faserverstärktem Kunststoff, etwa auf der Basis Glasfaser und Epoxid, oder einer Keramik, gebildet und ist hantelförmig ausgeführt. Er weist an den Enden einer Stange HS angeordnete Tragscheiben HT₁, HT₂ auf. In die Tragscheiben sind Bohrungen, wie z.B. HB₁ und HB₂, eingeformt, welche jeweils der Führung eines axial ausgerichteten Abschnitts des Widerstandsdrahts PTC dienen. Die Bohrungen sind auf einem konzentrisch um die Stange HS geführten Kreis angeordnet. Durch zwei benachbarte Bohrungen, z.B. HB₁ und HB₂, ist jeweils eine Windung des Mäanders geführt ist. Die mäanderförmige Anordnung des Drahtes (paralleles Hin- und Rückführen des Drahtes) hält die Eigeninduktivität des Strombegrenzers R_{B} klein.

Wie zuvor in Zusammenhang mit den beiden Ausführungsformen des strombegrenzenden Schalters beschrieben wurde, wird mittels des abschaltbaren Halbleiterschalters T₁ oder T₂ (GTO) der abzuschaltende Kurzschlussstrom innerhalb weniger µs auf den als PTC-Widerstand ausgebildeten Strombegrenzer R_{B} kommutiert. Deshalb darf bei den zu schaltenden Strömen von bis zu einigen 10 kA und den zu diesem Zeitpunkt erst zulässigen Überspannungen von einigen kV die Eigeninduktivität (L_{E}) des Elements lediglich einige µH (<10 µH) betragen, was mit der beschriebenen Konstruktion selbst bei Abmessungen im Bereich von 90 cm Länge und 20 cm Durchmesser gewährleistet ist. Der streng axialsymmetrische Aufbau verhindert ausserdem das Auftreten unzulässig hoher Stromkräfte zwischen den Einzelleitern.

### Ausführungsbeispiel

| Ein ausgeführter PTC-Widerstand mit den Daten | |
|---|---|
| Widerstand bei Raumtemperatur R_{K} | 0.5 Ω |
| Widerstandshub (durch Eigenerwärmung innerhalb ca. 1ms) R_{W}/R_{K} | ca.10 |
| Energieaufnahmevermögen (innerhalb ca. 5 ms) E | 0.1 MJ |
| Stromtragfähigkeit î | 10 kA |
| Spannungsfestigkeit (etwa Schaltstoss) û | 30 kV |
| Eigeninduktivität L_{E} | 10 µH |
| hat die Abmessungen | |
| Spulenlänge L | 0.9m |
| Spulendurchmesser D | 0.2 m |
| Drahtquerschnitt (rund) | 1.9 mm² |
| Drahtlänge | 12.1 m |

Beim Strombegrenzer nach der Erfindung wird durch Serienschaltung der als Kommutierungselement wirkenden Schaltvorrichtung T mit der Trennkontaktanordnung S_{T} bzw. mit der Schaltvorrichtung T_{S} und durch Zusammenwirken dieser Serienschaltung mit dem verzögert wirkenden Strombegrenzer erreicht, dass die bei der Strombegrenzung auftretende Überspannung nicht oder nur zu einem Bruchteil (entsprechend der Spannungssteuerung durch das Beschaltungsnetzwerk BNW) an der Schaltvorrichtung T wirkt. Dies führt dazu, dass man auch bei Schaltsystemen für Nennspannungen weit über den maximal zulässigen Spannungen an den Halbleiterschaltern T₁ und T₂ keine Serienschaltung dieser relativ teuren Elemente benötigt. Der strombegrenzende Schalter nach der Erfindung stellt daher eine besonders kostengünstige Lösung vor allem im Bereich von Mittel- und Hochspannung dar.

Vorteilhaften Einsatz kann der strombegrenzende Schalter nach der Erfindung vor allem in dreiphasigen Energieübertragungssysteme als Ersatz für Leistungsschalter konventioneller Bauart überall dort finden, wo die Strombegrenzung im Kurzschlussfall und die Funktionalität der phasenrichtige Schalthandlungen notwendig bzw. vorteilhaft im Netzbetrieb sind.

Darüber hinaus kann der strombegrenzende Schalter nach der Erfindung auch als strombegrenzender Gleichstromschalter verwendet werden.

### Bezugszeichenliste

- A, B: Stromanschlüsse
- BNW: Beschaltungsnetzwerk
- H: Tragkörper
- HB₁, HB₂: Bohrungen
- HS: Stange
- HT₁, HT₂: Tragscheiben
- K₁, K₂: Kommutierungspfade
- KES: Kurzschlusserkennungseinheit
- L_{L}: Induktivität
- PTC: Widerstandsdraht
- R_{L}: ohmschen Widerstand
- R_{B}: Strombegrenzer
- S: strombegrenzender Schalter
- S₁: Nennstromkontaktanordnung
- S_{S}: Trennschalter
- S_{T}: Trennkontaktanordnung
- T₁, T₂: Halbleiterschalter
- T, T_{P}, T_{S}: Schaltvorrichtungen
- i_{N}: Kurzschlussstrom
- i_{NB}: nicht begrenzter Kurzschlussstrom
- u_{N}: Netzspannung
- u_{S}: am Schalter S anstehende Spannung

## Patentansprüche

1. Strombegrenzender Schalter mit einer zur Aufnahme von Nennstrom bestimmten lichtbogenfesten Kontaktanordnung (S₁) und mit einem parallel zur Nennstromkontaktanordnung (S₁) geschalteten ersten Kommutierungspfad (K₁) mit einer stromunterbrechenden ersten Schaltvorrichtung (T), dadurch gekennzeichnet, dass parallel zur Nennstromkontaktanordnung (S₁) und zum ersten Kommutierungspfad (K₁) ein zweiter Kommutierungspfad (K₂) geschaltet ist mit einem verzögert auf den von ihm geführten Kommutierungsstrom ansprechenden Strombegrenzer (R_{B}) und mit einer in Serie zum Strombegrenzer (R_{B}) geschalteten zweiten Schaltvorrichtung (T_{P}).

2. Schalter nach Anspruch 1, dadurch gekennzeichnet, dass der erste Kommutierungspfad (K₁) in Serie geschaltet die erste Schaltvorrichtung (T) und eine Trennkontaktanordnung (S_{T}) aufweist.

3. Schalter nach Anspruch 2, dadurch gekennzeichnet, dass die erste Schaltvorrichtung (T) einen ersten abschaltbaren Halbleiterschalter (T₁) enthält.

4. Schalter nach Anspruch 3, dadurch gekennzeichnet, dass die erste Schaltvorrichtung (T) einen zweiten abschaltbaren Halbleiterschalter (T₂) aufweist, welcher antiparallel zum ersten Halbleiterschalter (T₁) geschaltet ist.

5. Schalter nach Anspruch 1, dadurch gekennzeichnet, dass die erste Schaltvorrichtung (T) mehrere in Serie geschaltete erste Halbleiterschalter (T₁, T₃) enthält, von denen einer (T₁) abschaltbar ausgebildet ist, sowie ein parallel zu den ersten Halbleiterschaltern geschaltetes Beschaltungsnetzwerk (BNW).

6. Schalter nach Anspruch 5, dadurch gekennzeichnet, dass die erste Schaltvorrichtung (T) zweite Halbleiterschalter (T₂, T₄) aufweist, welche antiparallel zu den ersten Halbleiterschaltern (T₁, T₃) und zum Beschaltungsnetzwerk (BNW) geschaltet sind.

7. Schalter nach einem der Ansprüche 1 bis 6, dadurch gekennzeichnet, dass der Strombegrenzer (R_{B}) einen PTC-Widerstand enthält.

8. Schalter nach Anspruch 7, dadurch gekennzeichnet, dass der PTC-Widerstand einen im wesentlichen axialsymmetrisch ausgebildeten Tragkörper (HK) und einen nach Art eines Mäanders geführten Widerstandsdraht (PTC) aus einem PTC-Eigenschaften aufweisenden Material aufweist.

9. Schalter nach Anspruch 8 , dadurch gekennzeichnet, dass der Tragkörper (HK) hantelförmig ausgebildet ist und an den Enden einer axial geführten Stange (HS) angeordnete Tragscheiben (HT₁, HT) aufweist.

10. Schalter nach Anspruch 9, dadurch gekennzeichnet, dass in die Tragscheiben Bohrungen (HB₁, HB₂) eingeformt sind, welche jeweils der Führung eines axial ausgerichteten Abschnitts des Widerstandsdrahts (PTC) dienen.

11. Schalter nach Anspruch 10, dadurch gekennzeichnet, dass die Bohrungen (HB₁, HB₂) auf einem konzentrisch um die Stange (HS) geführten Kreis angeordnet sind, und dass durch zwei benachbarte Bohrungen (HB₁, HB₂) jeweils eine Windung des Mäanders geführt ist.
